# EUROPÄISCHE PATENTSCHRIFT

(11) **EP 3 625 101 B1**
(45) Veröffentlichungstag und Bekanntmachung des Hinweises auf die Patenterteilung: **29.09.2021**
(21) Anmeldenummer: 18733157.4
(22) Anmeldetag: 11.05.2018
(51) Int. Cl.: B61F 15/06

(54) **SCHIENENFAHRZEUG**
RAIL VEHICLE
VÉHICULE FERROVIAIRE

(30) Priorität: 17.05.2017 AT 504232017
(43) Veröffentlichungstag der Anmeldung: 25.03.2020
(73) Patentinhaber: Miba Gleitlager Austria GmbH, 4663 Laakirchen (AT)
(72) Erfinder: HÖLZL, Johannes Sebastian, 4880 Berg im Attergau (AT)
(74) Vertreter: Burger, Hannes
(86) Internationale Anmeldenummer: PCT/AT2018/060093
(87) Internationale Veröffentlichungsnummer: WO 2018/209372

(56) Entgegenhaltungen:
- BE-A- 500 351
- DE-C- 478 692
- DE-C- 648 581
- FR-A- 376 545
- FR-A- 590 081
- FR-A- 1 354 922

## Beschreibung

Die Erfindung betrifft ein Schienenfahrzeug.

Aus der US4072371 A ist ein Lager für ein Schienenfahrzeug mit einem Metallblock mit einer zylindrischen Vertiefung bekannt.

Aus der FR1354922 A ist ein Gleitlager für ein Schienenfahrzeug bekannt. Das Lager ist zur Aufnahme eines Wellenstummels einer Radsatzwelle ausgebildet. Außerdem weist das Lager einen Ölsumpf zur Schmierung des Lagers auf, wobei das Öl mittels einer Scheibe, die in den Ölsumpf eintaucht, in das Innere des Lagers verteilt wird.

Das aus der FR1354922 A bekannte Lager weist den Nachteil auf, dass das Öl nur unzuverlässig im Inneren des Lagers verteilt wird und dadurch die Schmierwirkung beschränkt ist. Aufgabe der vorliegenden Erfindung war es, die Nachteile des Standes der Technik zu überwinden und ein Schienenfahrzeug zur Verfügung zu stellen, welches eine verbesserte Lagersituation aufweist.

Diese Aufgabe wird durch eine Vorrichtung gemäß den Ansprüchen gelöst.

Erfindungsgemäß ist ein Schienenfahrzeug ausgebildet. Das Schienenfahrzeug umfasst:
ein Fahrgestell;
ein Radsatz mit einer Radsatzwelle und zwei Rädern;
zumindest zwei Radsatzlagervorrichtungen, welche am Fahrgestell angeordnet sind oder im Fahrgestell ausgebildet sind, wobei die Radsatzlagervorrichtungen jeweils eine Wellenaufnahme aufweisen, in welcher eine obere Gleitlagerhalbschale und eine untere Gleitlagerhalbschale, ortsfest aufgenommen sind, wobei die Radsatzwelle in den beiden Gleitlagerhalbschalen drehbar gelagert ist, und wobei die Radsatzlagervorrichtung eine untere Gleitlagerhalbschale umfasst, welche mit der oberen Gleitlagerschale zusammenwirkt,
wobei ein Gehäuse ausgebildet ist, welches die Wellenaufnahme umgibt, wobei im Gehäuse ein Ölsumpf ausgebildet ist, in welchem Schmieröl zur Schmierung der Gleitlagerhalbschalen aufgenommen ist und wobei die Radsatzwelle durch eine Seitenwand des Gehäuses nach außen geführt ist, wobei die untere Gleitlagerhalbschale Ölzufuhrbohrungen aufweist, welche die untere Gleitlagerhalbschale radial durchdringen.

Die Gleitlagerhalbschalen sind als hydrodynamisches Gleitlager ausgebildet, wobei in der unteren Gleitlagerhalbschale an der radialen Innenseite ein Strömungskanal ausgebildet ist, welcher in der unteren Gleitlagerhalbschale oder in der oberen Gleitlagerhalbschale in Form eines Keilspaltes ausläuft, wobei der Strömungskanal mit den Ölzufuhrbohrungen der unteren Gleitlagerhalbschale gekoppelt ist.

Das erfindungsgemäße Schienenfahrzeug weist den Vorteil auf, dass das hydrodynamische Gleitlager das nötige Schmieröl direkt aus dem Ölsumpf im Gehäuse beziehen kann und somit gute Lagereigenschaften aufweist. Dadurch kann insbesondere eine Selbstschmierung des hydrodynamischen Gleitlagers erreicht werden, wobei das hydrodynamische Gleitlager das notwendige Schmieröl selbstständig vom Ölsumpf ansaugen kann. Es bedarf daher keiner Fremdschmierung, wie etwa mittels einer Ölpumpe. Auch ein sonstiges Fördermittel zum Verteilen des Schmieröls, wie etwa ein aus dem Stand der Technik bekanntes Flügelrad, welches in den Ölsumpf eintaucht, wird bei der erfindungsgemäßen Ausführung nicht benötigt. Somit können die Verluste möglichst gering gehalten werden, was zu einem verbesserten Wirkungsgrad des Schienenfahrzeuges führt.

Weiters kann es zweckmäßig sein, wenn die obere Gleitlagerhalbschale zwischen der Wellenaufnahme und der Radsatzwelle angeordnet ist und die untere Gleitlagerhalbschale mittels einem Lagerdeckel in Position gehalten wird. Von Vorteil ist hierbei, dass durch diese Maßnahme die Radsatzlagervorrichtungen einfach zerlegt werden können, um das Gleitlager austauschen bzw. warten zu können.

In einer Alternativvariante kann auch vorgesehen sein, dass die untere Gleitlagerhalbschale direkt durch den Lagerdeckel gebildet wird. Dies ist möglich, da die untere Gleitlagerhalbschale im Normalbetrieb keine Kräfte aufnehmen muss, sondern nur zur Vervollständigung der oberen Gleitlagerhalbschale dient.

Ferner kann vorgesehen sein, dass die untere Gleitlagerhalbschale Ölzufuhrbohrungen aufweist, welche die untere Gleitlagerhalbschale radial durchdringen. Weiters kann vorgesehen sein, dass im Lagerdeckel Ölzufuhrbohrungen ausgebildet sind, welche mit den Ölzufuhrbohrungen der unteren Gleitlagerhalbschale deckungsgleich sind. Durch die Ölzufuhrbohrungen kann das im Gleitlager benötigte Schmieröl an die Lauffläche des Gleitlagers zugeführt werden.

Darüber hinaus kann vorgesehen sein, dass der Ölstand im Ölsumpf so hoch gewählt ist, dass alle Eintrittsöffnungen der Ölzufuhrbohrungen im Lagerdeckel vollständig unterhalb des Niveau des Ölstandes liegen und in den Ölsumpf eintauchen. Von Vorteil ist hierbei, dass durch diese Maßnahme das notwendige Schmieröl durch die Drehbewegung der Radsatzwelle und die dabei auftretenden Relativgeschwindigkeiten selbstständig aus dem Ölsumpf angesaugt werden kann, wobei die Ölzufuhrbohrungen den notwendigen Volumenstrom an Schmieröl bereitstellen können.

Als radiale Innenseite der Gleitlagerhalbschale wird die Lauffläche der Gleitlagerhalbschale bezeichnet, welche zur Übertragung von Radialkräften dient. Von Vorteil an dieser Maßnahme ist, dass mittels einem derartigen Strömungskanal die hydrodynamischen Gleiteigenschaften des Gleitlagers verbessert werden können. Besonders bei Hochgeschwindigkeitszügen ist es notwendig, dass das hydrodynamische Gleitlager bei einer großen Drehzahl möglichst leichtgängig ist.

Gemäß einer Weiterbildung ist es möglich, dass, der Strömungskanal eine axiale Erstreckung zwischen 5% und 95%, insbesondere zwischen 10% und 80%, bevorzugt zwischen 30% und 70% der axialen Erstreckung der unteren Gleitlagerhalbschale aufweist. Von Vorteil ist hierbei, dass sich der Strömungskanal nicht über die gesamte Breite des Gleitlagers erstreckt und somit die Druckverteilung innerhalb des hydrodynamischen Gleitlagers verbessert werden kann.

Ferner kann es zweckmäßig sein, wenn die beiden Radsatzlagervorrichtungen zwischen den beiden Rädern des Radsatzes angeordnet sind. Von Vorteil ist hierbei, dass besonders bei einer derartigen Ausgestaltung der Lagersituation des Radsatzes die hydrodynamischen Eigenschaften des Gleitlagers verbessert werden können. Dies kann dadurch erreicht werden, dass durch eine derartige Maßnahme die Verformung der Radsatzwelle geringer gehalten werden kann als wenn das Radlager außerhalb der Räder angeordnet wäre. Somit wird eine übermäßige Schrägstellung der Radsatzwelle relativ zum Gleitlager weitestgehend vermieden. Darüber hinaus kann durch eine derartige Maßnahme bei möglichst geringem Bauraum eine möglichst große Spurweite erzielt werden. Diese ist besonders bei Hochgeschwindigkeitszügen notwendig.

Darüber hinaus kann vorgesehen sein, dass ein oberer Teil des Gehäuses mit der Wellenaufnahme gekoppelt ist, oder einteilig mit der Wellenaufnahme ausgebildet ist und ein unterer Teil des Gehäuses als Gehäusedeckel ausgebildet ist, welcher mittels Befestigungsmittel mit dem oberen Teil des Gehäuses gekoppelt ist. Von Vorteil ist hierbei, dass durch diese Maßnahme der Gehäusedeckel entfernt werden kann, um das Gleitlager warten zu können.

Weiters kann vorgesehen sein, dass das Fahrgestell derart ausgebildet ist, dass die Außenseite des Gehäuses während der Fahrt von der Zugluft umströmt wird. Von Vorteil ist hierbei, dass durch diese Maßnahme die im Gleitlager erzeugte Wärmemenge mit einer höheren Effizienz an die Umwelt abgegeben werden kann. Dies ist besonders bei Hochgeschwindigkeitszügen notwendig, da hier aufgrund der hohen Drehzahl des Radsatzes eine große Wärmemenge anfällt.

Gemäß einer besonderen Ausprägung ist es möglich, dass an der Außenseite des Gehäuses, insbesondere an den Seitenwänden Kühlrippen angeordnet sind. Von Vorteil ist hierbei, dass durch diese Maßnahme die im Gleitlager erzeugte Wärmemenge mit einer höheren Effizienz an die Umwelt abgegeben werden kann. Dies ist besonders bei Hochgeschwindigkeitszügen notwendig, da hier aufgrund der hohen Drehzahl des Radsatzes eine große Wärmemenge anfällt. Die Kühlrippen können insbesondere in Fahrtrichtung ausgerichtet sein, sodass sie während der Fahrt von der Zugluft umströmt werden.

Entsprechend einer vorteilhaften Weiterbildung kann vorgesehen sein, dass im Ölsumpf eine poröse Struktur angeordnet ist, die zur Beruhigung des Schmieröls im Ölsumpf dient. Das Schmieröl kann in den Poren der porösen Struktur aufgenommen werden. Von Vorteil ist hierbei, dass durch diese Maßnahme ein Aufschäumen des Schmieröls im Ölsumpf vermindert bzw. zur Gänze vermieden werden kann.

Insbesondere kann es vorteilhaft sein, wenn in zumindest einer der Seitenwände des Gehäuses eine Wellendichtung in Form eines Wellendichtringes angeordnet ist, welcher zur Abdichtung zwischen der Radsatzwelle und dem Gehäuse dient. Von Vorteil ist hierbei, dass ein derartiger Wellendichtring eine gute Dichtwirkung aufweist und auch bei Stillstand des Radsatzes seine Dichtwirkung entfalten kann.

Alternativ dazu kann vorgesehen sein, dass in zumindest einer der Seitenwände des Gehäuses eine Wellendichtung in Form einer Labyrinthdichtung zwischen dem Gehäuse und der Radsatzwelle ausgebildet ist, welche zur Abdichtung der Radsatzwelle dient. Von Vorteil ist hierbei, dass eine derartige Labyrinthdichtung auch bei hohen Drehzahlen nur einen geringen Widerstand aufweist. Darüber hinaus wird keine an der Radsatzwelle anliegende Manschette benötigt, welche bei hohen Drehzahlen durch thermische Einwirkung zerstört werden könnte.

Anstatt der Labyrinthdichtung können natürlich auch andere berührungslose Dichtungen, wie etwa ein Ringspalt verwendet werden. Beispielsweise kann die Dichtung durch einen in einem Einstich lose eingelegten Bronzegleitring gebildet werden.

Darüber hinaus kann vorgesehen sein, dass in den Seitenwänden des Gehäuses an der Unterseite der Labyrinthdichtung eine Ölablaufbohrung angeordnet ist. Von Vorteil ist hierbei, dass durch diese Maßnahme das in der Labyrinthdichtung während dem Fahrbetrieb angesammelte Schmieröl wieder zurück in das Gehäuseinnere geführt werden kann.

Alternativ zur Ölablaufbohrung kann vorgesehen sein, dass eine Innenwand der Labyrinthdichtung niedriger ist als eine Außenwand der Labyrinthdichtung und dadurch gewährleistete ist, dass das sich in der Labyrinthdichtung absetzende Schmieröl nicht aus dem Gehäuse austreten kann.

Vorteilhaft ist auch eine Ausprägung, gemäß welcher vorgesehen sein kann, dass in Axialerstreckung der Radsatzwelle außerhalb der Seitenwand des Gehäuses eine Sperrwand angeordnet ist, wobei zwischen der Sperrwand und der Seitenwand des Gehäuses eine Sperrluftkammer ausgebildet ist. Von Vorteil ist hierbei, dass durch diese Maßnahme Sperrluft in die Sperrluftkammer eingeleitet werden kann, wodurch ein Auslaufen des Schmieröles aus dem Gehäuse vermieden werden kann und gleichzeitig das Eintreten von Schmutz, insbesondere Staub, in das Innere des Gehäuses vermieden werden kann. Gleichzeitig kann im Gehäuse eine Bohrung vorgesehen sein, welche zur Abfuhr der in das Gehäuse eindringenden Sperrluft dient. Dadurch kann über den Luftaustausch eine zusätzliche Kühlwirkung erreicht werden.

Gemäß einer Weiterbildung ist es möglich, dass an zumindest einer der Seitenwände eine Durchgangsbohrung ausgebildet ist, welche als Saugbohrung zum Aufbringen eines Unterdruckes im inneren des Gehäuses dient. Von Vorteil ist hierbei, dass durch diese Maßnahme das Gehäuse evakuiert werden kann und somit ein Austreten des Schmieröles vermieden werden kann, da im Inneren des Gehäuses ein Unterdruck herrscht. Zusätzlich kann durch diese Maßnahme ein Luftaustausch im Gehäuse ermöglicht werden, was zu einer zusätzlichen Kühlung führt. Die Saugbohrung wirkt während des Betriebes des Schienenfahrzeuges durch den Venturi-Effekt so, dass die am Gehäuse vorbeistreichende Luft einen Unterdruck erzeugt, wodurch Luft aus dem Gehäuse heraus gesaugt wird.

Ferner kann es zweckmäßig sein, wenn der Durchgangsbohrung ein Filterelement vorgeschalten ist. Von Vorteil ist hierbei, dass durch das Filterelement ein Austreten von möglicherweise zerstäubtem Schmieröl aus dem Gehäuse vermieden werden kann. Das Filterelement kann insbesondere in Form einer porösen Struktur, wie etwa einer Metallstruktur ausgebildet sein. Weiters kann vorgesehen sein, dass das Filterelement im Eintrittsbereich der Durchgangsbohrung angeordnet ist, wobei die Durchgangsbohrung im Eintrittsbereich zum Inneren des Gehäuses hin fallend ausgebildet ist. Dadurch kann das im Filterelement aufgefangene Schmieröl wieder in das Innere des Gehäuses ablaufen.

Darüber hinaus kann vorgesehen sein, dass der Durchmesser der Radsatzwelle im Bereich der Gleitlagerhalbschalen größer ist als der Durchmesser der restlichen Länge der Radsatzwelle oder dass im Bereich der Gleitlagerhalbschalen ein Aufsatzelement ausgebildet ist, welches an der Radsatzwelle befestigt ist. Von Vorteil ist hierbei, dass durch diese Maßnahme der Gleitbereich zwischen den Gleitlagerhalbschalen und der Welle einen größeren radialen Abstand zum Zentrum der Welle aufweist, als der Bereich der Dichtung im Wellengehäuse. Somit kann der Ölstand im Ölsumpf so hoch gewählt werden, dass das untere Gleitlager zumindest teilweise in den Ölsumpf eintaucht und gleichzeitig der Ölstand so niedrig ist, dass er nicht bis an den Bereich des Durchtritts der Radsatzwelle im Gehäuse reicht. Somit kann bei verbesserter Schmierwirkung ein unerwünschtes Auslaufen von Schmieröl aus dem Gehäuse weitestgehend vermieden werden. Bei Verwendung eines Aufsatzelementes kann außerdem für das Aufsatzelement ein Material verwendet werden, welches in Kombination mit dem Gleitlager verbesserte Gleiteigenschaften aufweist. Somit können die Radsatzwelle und das Aufsatzelement aus einem unterschiedlichen Material gebildet sein.

Weiters kann vorgesehen sein, dass zumindest eine der beiden Gleitlagerhalbschalen einen Bund zur axialen Kraftübertragung aufweist. Von Vorteil ist hierbei, dass durch diese Maßnahme nicht nur eine radiale Lagerung sondern auch eine axiale Lagerung des Radsatzes erreicht werden kann.

Gemäß einer besonderen Ausprägung ist es möglich, dass die untere Gleitlagerhalbschale weitere Ölzufuhrbohrungen aufweist, welche die untere Gleitlagerhalbschale im Bereich des Bundes axial durchdringen, wobei im Lagerdeckel weitere Ölzufuhrbohrungen ausgebildet sind, welche mit den weiteren Ölzufuhrbohrungen der unteren Gleitlagerhalbschale deckungsgleich sind. Von Vorteil ist hierbei, dass durch diese Maßnahme auch die axiale Lagerung mittels dem Bund als hydrodynamisches Gleitlager ausgebildet sein kann und somit ebenfalls einen geringen Reibungswiderstand und einen geringen Verschleiß aufweisen kann. Entsprechend einer vorteilhaften Weiterbildung kann vorgesehen sein, dass in der unteren Gleitlagerhalbschale an der Innenseite des Bundes ein weiterer Strömungskanal ausgebildet ist, welcher in der unteren Gleitlagerhalbschale oder in der oberen Gleitlagerhalbschale in Form eines weiteren Keilspaltes ausläuft, wobei der weitere Strömungskanal mit den weiteren Ölzufuhrbohrungen der unteren Gleitlagerhalbschale gekoppelt ist. Von Vorteil ist hierbei, dass durch diese Maßnahme die hydrodynamischen Gleiteigenschaften des Gleitlagers verbessert werden können.

Anstatt der oberen und der unteren Gleitlagerhalbschale kann auch eine hohlzylindrische Gleitlagerbuchse verwendet werden. Eine derartige Lösung ist als Äquivalent zu sehen.

Als Schmieröl können Mineralöle verwendet werden. Als besonders vorteilhaft hat sich die Verwendung von Spindelöl erwiesen, welches eine geringe kinematische Viskosität aufweist. Insbesondere ist es vorteilhaft, wenn die kinematische Viskosität des Schmieröles gemäß DIN 51 562 -1 bei 40°C zwischen 5mm²/s und 100mm²/s und bei 100°C zwischen 1mm²/s und 10mm²/s liegt.

Zum besseren Verständnis der Erfindung wird diese anhand der nachfolgenden Figuren näher erläutert.

Es zeigen jeweils in stark vereinfachter, schematischer Darstellung:
- Fig. 1: eine Darstellung eines Schienenfahrzeuges;
- Fig. 2: eine Schnittdarstellung einer Radsatzlagervorrichtung des Schienenfahrzeuges gemäß der Schnittlinie II-II in Fig. 1;
- Fig. 3: eine Schnittdarstellung eines Ausführungsbeispiels der Radsatzlagervorrichtung gemäß der Schnittlinie III-III in Fig. 2;
- Fig. 4: eine Detailansicht X einer möglichen Abdichtung mittels einer Labyrinthdichtung;
- Fig. 5: eine Detailansicht Y einer Ausführungsvariante mit einer Saugbohrung;
- Fig. 6: eine Schnittdarstellung eines Ausführungsbeispiels der Radsatzlagervorrichtung mit Kühlrippen gemäß der Schnittlinie III-III in Fig. 2;
- Fig. 7: eine Schnittdarstellung eines Ausführungsbeispiels der Radsatzlagervorrichtung mit einer Sperrluftkammer gemäß der Schnittlinie III-III in Fig. 2;
- Fig. 8: eine perspektivische Ansicht eines Ausführungsbeispiels der Gleitlagerhalbschalen;
- Fig. 9: eine Schnittdarstellung eines Ausführungsbeispiels der Radsatzlagervorrichtung mit größerem Durchmesser der Radsatzwelle im Lagerbereich gemäß der Schnittlinie III-III in Fig. 2;
- Fig. 10: eine perspektivische Darstellung eines Ausführungsbeispiels einer Radsatzwelle mit einem Aufsatzelement im Bereich der Lagerstelle;
- Fig. 11: eine Schnittdarstellung eines Ausführungsbeispiels der Radsatzlagervorrichtung mit zusätzlicher Axiallagerung gemäß der Schnittlinie III-III in Fig. 2;
- Fig. 12: eine Schnittdarstellung eines weiteren Ausführungsbeispiels der Radsatzlagervorrichtung mit zusätzlicher Axiallagerung gemäß der Schnittlinie III-III in Fig. 2;
- Fig. 13: eine perspektivische Schnittdarstellung eines weiteren Ausführungsbeispiels der Radsatzlagervorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

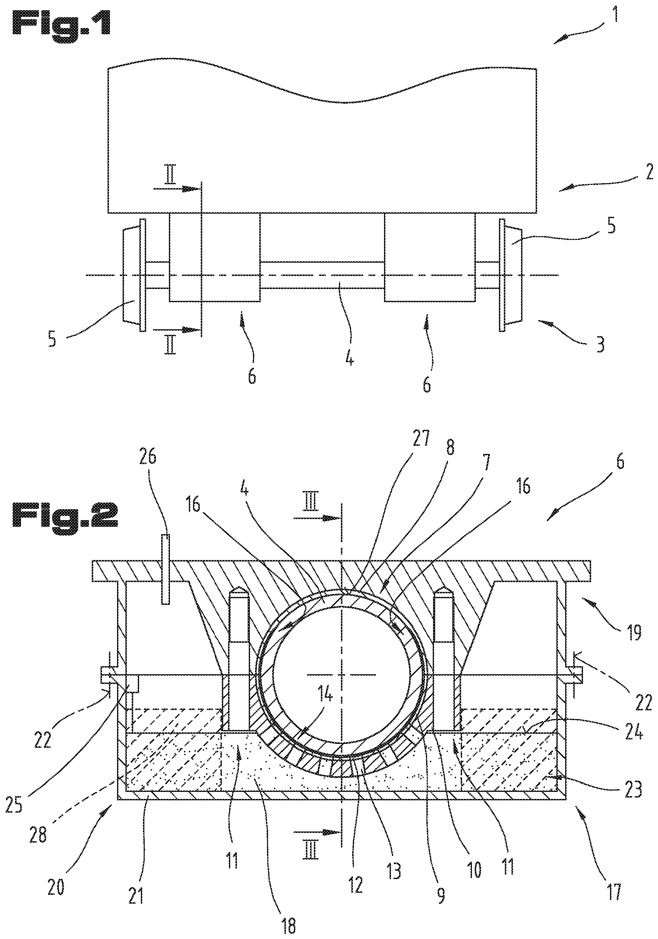

Fig. 1 zeigt eine schematische Darstellung eines Schienenfahrzeuges 1, welches zur gleisgebundenen Beförderung von Personen oder Gütern dient. Das Schienenfahrzeug 1 weist ein Fahrgestell 2 auf, an welchem ein Radsatz 3 angeordnet ist. Der Radsatz 3 umfasst eine Radsatzwelle 4, an welchem zwei Räder 5 angeordnet sind. Die Räder 5 laufen auf einer Schiene.

Vorzugsweise ist vorgesehen, dass die Räder 5 mittels der Radsatzwelle 4 verdrehstarr zueinander gekoppelt sind. Alternativ kann auch vorgesehen sein, dass je Rad 5 eine Radsatzwelle 4 ausgebildet ist.

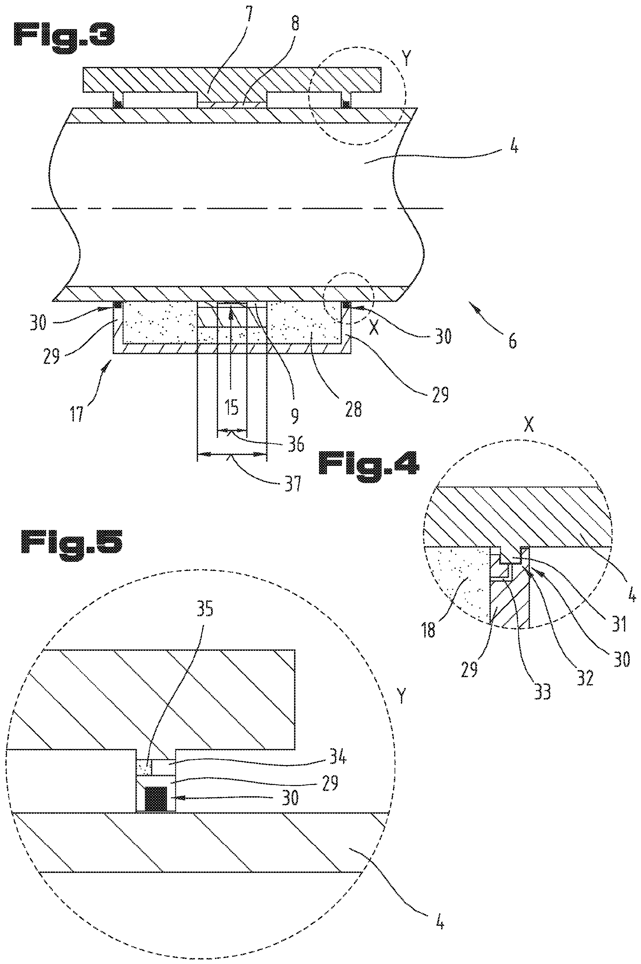

Weiters ist eine Radsatzlagervorrichtung 6 vorgesehen, mittels welcher der Radsatz 3 drehbar am Fahrgestell 2 befestigt ist. Die Radsatzlagervorrichtung 6 ist mit dem Fahrgestell 2 gekoppelt bzw. in einem weiteren Ausführungsbeispiel teilweise im Fahrgestell 2 ausgebildet. Wie aus Fig. 5 weiters ersichtlich, sind am Fahrgestell 2 vorzugsweise zwei der Radsatzlagervorrichtungen 6 angeordnet, wobei die Radsatzwelle 4 in den Radsatzlagervorrichtungen 6 drehbar gelagert ist.

Die beschriebene Radsatzlagervorrichtung 6 ist besonders vorteilhaft zur Verwendung in einem Hochgeschwindigkeitszug.

Fig. 2 zeigt eine schematische Schnittdarstellung eines Ausführungsbeispiels der Radsatzlagervorrichtung 6 gemäß der Schnittlinie II - II aus Fig. 1. Wie aus Fig. 2 ersichtlich, kann vorgesehen sein, dass die Radsatzwelle 4 als Hohlwelle ausgeführt ist. Natürlich kann die Radsatzwelle 4 auch als Vollwelle ausgeführt sein.

Weiters ist in der Radsatzlagervorrichtung 6 eine Wellenaufnahme 7 ausgebildet, welche zur Aufnahme der Radsatzwelle 4 unter Zwischenschaltung einer oberen Gleitlagerhalbschale 8 dient. Zusammen mit einer unteren Gleitlagerhalbschale 9 dient die obere Gleitlagerhalbschale 8 zur Lagerung der Radsatzwelle 4. Die obere Gleitlagerhalbschale 8 dient zur Kraftaufnahme bzw. zur Kraftübertragung zwischen der Wellenaufnahme 7 des Radsatzes 3 und der Radsatzwelle 4. Die Radsatzwelle 4 ist hierbei drehbar in den beiden Gleitlagerhalbschalen 8, 9 aufgenommen. Die untere Gleitlagerhalbschale 9 dient zur Vervollständigung des hydrodynamischen Lagers, dient jedoch im Normalfall nicht zur Kraftübertragung.

Anstatt der beiden Gleitlagerhalbschalen 8, 9 kann natürlich auch eine Gleitlagerbuchse verwendet werden, in welcher beide Gleitlagerhalbschalen 8, 9 vereint sind.

Weiters ist ein Lagerdeckel 10 ausgebildet, welcher zusammen mit der Wellenaufnahme 7 zur Aufnahme bzw. zum Klemmen und zum Positionieren der beiden Gleitlagerhalbschalen 8, 9 dient. Der Lagerdeckel 10 ist mittels Befestigungsmittel 11 mit der Wellenaufnahme 7 gekoppelt, wobei in Fig. 2 aus Gründen der Übersichtlichkeit die Befestigungsmittel 11 nicht dargestellt sind. Die Befestigungsmittel 11 können beispielsweise in Form von Schrauben ausgebildet sein.

Wie aus Fig. 2 weiters ersichtlich, kann vorgesehen sein, dass die untere Gleitlagerhalbschale 9 eine oder mehrere Ölzufuhrbohrungen 12 aufweist, welche die untere Gleitlagerhalbschale 9 in radialer Richtung durchdringen. Weiters kann vorgesehen sein, dass der Lagerdeckel 10 ebenfalls Ölzufuhrbohrungen 13 aufweist, welche den Lagerdeckel 10 ebenfalls in radialer Richtung durchdringen.

Die Ölzufuhrbohrungen 13 des Lagerdeckels 10 können deckungsgleich mit den Ölzufuhrbohrungen 12 der unteren Gleitlagerhalbschalen 9 sein. Weiters kann vorgesehen sein, dass an der radialen Innenseite 14 der unteren Gleitlagerhalbschale 9 ein Strömungskanal 15 ausgebildet ist, welcher mit den Ölzufuhrbohrungen 12 der unteren Gleitlagerhalbschale 9 strömungsverbunden ist. Der Strömungskanal 15 kann entweder in der unteren Gleitlagerhalbschale 9 oder in der oberen Gleitlagerhalbschale 8 in einem Keilspalt 16 auslaufen.

Weiters umfasst die Radsatzlagervorrichtung 6 ein Gehäuse 17 welches die Wellenaufnahme 7 bzw. die beiden Gleitlagerhalbschalen 8, 9 umgibt. Das Gehäuse 17 dient zur Aufnahme von Schmieröl 18, welches zum Betrieb des hydrodynamischen Gleitlagers dient. Insbesondere kann vorgesehen sein, dass das Gehäuse 17 einen oberen Teil 19 aufweist, welcher entweder einstückig mit der Wellenaufnahme 7 ausgebildet ist oder mit der Wellenaufnahme 7 gekoppelt ist. Außerdem weist das Gehäuse 17 einen unteren Teil 20 auf, welcher zusammen mit dem oberen Teil 19 den Innenraum umschließt. Der untere Teil 20 des Gehäuses 17 kann insbesondere als Gehäusedeckel 21 ausgeführt sein, welcher mittels Befestigungsmittel 22 am oberen Teil 19 des Gehäuses 17 befestigt ist. Im unteren Teil 20 des Gehäuses 17 ist ein Ölsumpf 23 ausgebildet, in welchem das Schmieröl 18 aufgenommen ist. Der Ölsumpf 23 ist bis zu einem gewissen Ölstand 24 mit Schmieröl 18 gefüllt. Der optimale Ölstand 24 wird bei Neubefüllung des Ölsumpfes 23 durch Schmieröl 18 eingestellt, wobei der Ölstand 24 während des Betriebes des Schienenfahrzeuges 1 und auch über die Lebensdauer der Radsatzlagervorrichtung 6 variieren kann.

Optional ist es denkbar, dass eine Sensorik 25 vorgesehen ist, mittels welcher der Ölstand 24 erfasst bzw. überwacht wird. Darüber hinaus kann eine Ölzufuhrleitung 26 ausgebildet sein, mittels welcher verloren gegangenes Schmieröl 18 manuell oder auch automatisch nachgefüllt werden kann.

Wie aus Fig. 2 ersichtlich, wird der Ölstand 24 vorzugsweise so hoch gewählt, dass die Ölzufuhrbohrungen 13 im Lagerdeckel 10 zumindest in deren Ansaugbereich vollständig unterhalb des Niveaus des Ölstandes 24 liegen. Vorzugsweise wird der Ölstand 24 so hoch gewählt, dass eine Gleitoberfläche 27 der Radsatzwelle 4 im Ruhezustand ebenfalls in das Schmieröl 18 eintaucht.

Beim Anfahren des Schienenfahrzeuges 1 liegt zwischen der oberen Gleitlagerhalbschale 8 und der Gleitoberfläche 27 der Radsatzwelle 4 eine Gleitreibung vor. Somit ist es notwendig, dass die obere Gleitlagerhalbschale gute Notlaufeigenschaften bzw. gute Gleitreibungseigenschaften aufweist. Je höher die Drehgeschwindigkeit der Radsatzwelle 4 ist, desto mehr Schmieröl 18 wird zum Keilspalt 16 befördert, wodurch es zu einem Aufschwimmen der oberen Gleitlagerhalbschale 8 und somit zu einem hydrodynamischem Gleiten kommt.

Wie in Fig. 2 weiters schematisch dargestellt, kann vorgesehen sein, dass im Bereich des Ölsumpfes 23 eine poröse Struktur 28 ausgebildet ist, welche zur Beruhigung des Schmieröles 18 dient. Die poröse Struktur 28 kann sich im gesamten Bereich des Ölsumpfes 23 befinden. Weiters ist es auch denkbar, dass die poröse Struktur 28 nur in Teilbereichen des Ölsumpfes 23 ausgebildet ist. Die poröse Struktur 28 kann beispielsweise durch einen Kunststoffschwamm oder durch einen Metallschwamm gebildet sein.

Fig. 3 zeigt eine schematische Darstellung eines Ausführungsbeispiels der Radsatzlagervorrichtung 6 gemäß der Schnittlinie III - III in Fig. 2, wobei für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

Wie aus Fig. 3 ersichtlich, kann vorgesehen sein, dass die Radsatzwelle 4 durch beide Seitenwände 29 des Gehäuses 17 geführt ist. Zur Abdichtung zwischen der Seitenwand 29 des Gehäuses 17 und der Radsatzwelle 4 ist eine Wellendichtung 30 vorgesehen. Die Wellendichtung 30 kann in verschiedensten Ausführungen ausgebildet sein. Beispielsweise ist es denkbar, dass die Wellendichtung 30 in Form eines Wellendichtringes ausgebildet ist. Weiters ist es auch denkbar, dass die Wellendichtung 30 in Form einer berührungslosen Dichtung, wie etwa einer Labyrinthdichtung ausgebildet ist.

Ein mögliches Ausführungsbeispiel einer Labyrinthdichtung ist in Fig. 4 schematisch dargestellt. Wie aus Fig. 4 ersichtlich, kann vorgesehen sein, dass an der Radsatzwelle 4 ein Wulst 31 ausgebildet ist, welcher mit einer Ausnehmung 32 in der Seitenwand 29 des Gehäuses 17 korrespondiert. Weiters kann eine Ölablaufbohrung 33 vorgesehen sein, welche zum Abführen von überflüssigem Öl dient. Anstatt der Ölablaufbohrung 33 kann auch vorgesehen sein, dass, wie in Fig. 4 schematisch dargestellt, die innere Wand der Ausnehmung 32 niedriger ist als die äußere Wand der Ausnehmung 32 und somit das Schmieröl 18 immer in das Innere des Gehäuses 17 abfließt.

In Fig. 5 ist eine weitere Ausführungsvariante der Seitenwand 29 dargestellt. Wie aus Fig. 5 ersichtlich, kann vorgesehen sein, dass in der Seitenwand 29 eine Durchgangsbohrung 34 ausgebildet ist, welche zur Abfuhr von Luft aus dem Gehäuseinneren dient. Bei Anordnung der Durchgangsbohrung 34 in einer der Seitenwände 29 kann durch den Venturi-Effekt Luft aus dem Inneren des Gehäuses gesogen werden. Weiters kann vorgesehen sein, dass ein Filterelement 35 ausgebildet ist, welches dazu dient, um etwaige zerstäubte Ölrückstände aus der herausgesaugten Luft zurückzuhalten.

Wie aus Fig. 3 weiters ersichtlich, kann vorgesehen sein, dass eine axiale Erstreckung 36 des Strömungskanals 15 der unteren Gleitlagerhalbschale 9 geringer sein kann als eine axiale Erstreckung 37 der unteren Gleitlagerhalbschale 9.

Vorzugsweise kann vorgesehen sein, dass der Strömungskanal 15 mittig bezüglich der axialen Erstreckung 37 der unteren Gleitlagerhalbschale 9 angeordnet ist.

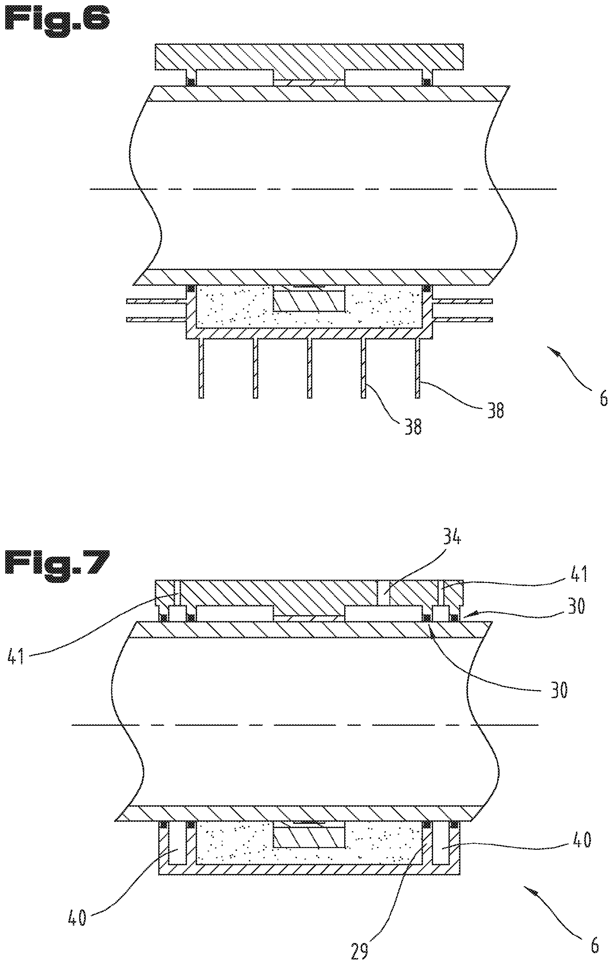

In der Fig. 6 ist eine weitere und gegebenenfalls für sich eigenständige Ausführungsform der Radsatzlagervorrichtung 6 gezeigt, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

Wie aus Fig. 6 ersichtlich, kann vorgesehen sein, dass am Gehäuse 17, insbesondere am Gehäusedeckel 21 an der Außenseite Kühlrippen 38 angeordnet sind, welche zur verbesserten Kühlung des Schmieröles 18 dienen.

Die Kühlrippen 38 sind vorzugsweise so ausgebildet, dass sie während dem Fahrbetrieb des Schienenfahrzeuges 1 von der Zugluft umströmt werden und somit zur Wärmeabfuhr dienen.

In der Fig. 7 ist eine weitere und gegebenenfalls für sich eigenständige Ausführungsform der Radsatzlagervorrichtung 6 gezeigt, wobei wiederum für gleiche Teile gleiche Bezugszeichen bzw. Bauteilbezeichnungen wie in den vorangegangenen Figuren 1 bis 6 verwendet werden. Um unnötige Wiederholungen zu vermeiden, wird auf die detaillierte Beschreibung in den vorangegangenen Figuren 1 bis 6 hingewiesen bzw. Bezug genommen.

Im Ausführungsbeispiel nach Fig. 7 ist außerhalb der Seitenwände 29 des Gehäuses 17 eine Sperrwand 39 ausgebildet, welche ebenfalls von der Radsatzwelle 4 durchdrungen wird. Zwischen der Sperrwand 39 und der Seitenwand 29 des Gehäuses 17 ist eine Sperrluftkammer 40 ausgebildet, welche über eine Druckluftzufuhr 41 mit Druckluft beaufschlagt werden kann. Hierbei kann die im Schienenfahrzeug 1 erzeugte Druckluft in die Druckluftzufuhr 41 geleitet werden.

Insbesondere kann vorgesehen sein, dass sowohl in der Sperrwand 39 als auch in der Seitenwand 29 eine Wellendichtung 30 vorgesehen ist und somit nur eine geringe Menge an Druckluft aus der Sperrluftkammer 40 entweicht. Weiters kann auch bei diesem Ausführungsbeispiel vorgesehen sein, dass eine Durchgangsbohrung 34 ausgebildet ist, über welche die durch die Sperrluftkammer in das Gehäuse eingebrachte Luft abgeführt werden kann. Dadurch kann zusätzlich zur Dichtwirkung der Sperrluftkammer 40 eine zusätzliche Kühlwirkung im Gehäuse erzielt werden.

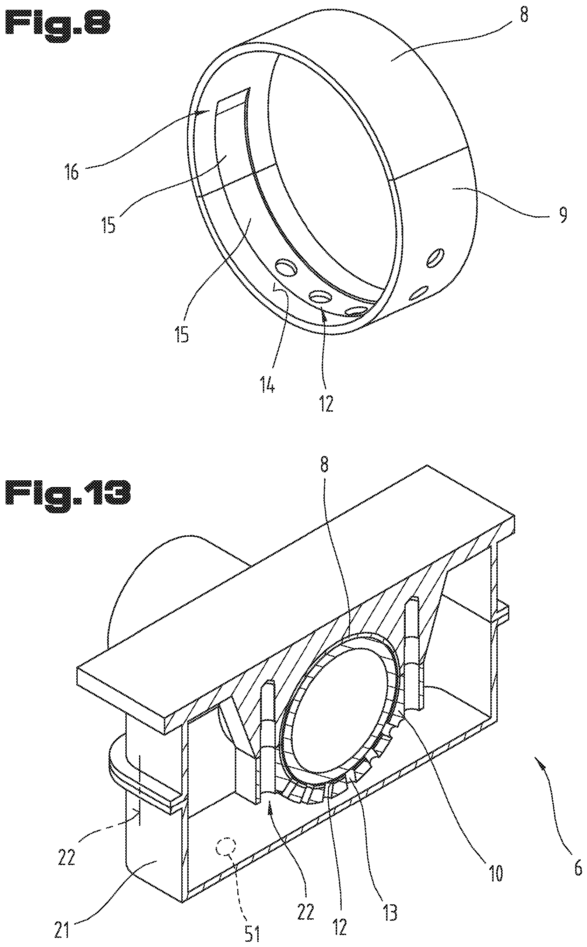

In der Fig. 8 ist eine weitere und gegebenenfalls für sich eigenständige Ausführungsform der Radsatzlagervorrichtung 6 gezeigt, wobei wiederum für gleiche Teile gleiche Bezugszeichen bzw. Bauteilbezeichnungen wie in den vorangegangenen Figuren 1 bis 7 verwendet werden. Um unnötige Wiederholungen zu vermeiden, wird auf die detaillierte Beschreibung in den vorangegangenen Figuren 1 bis 7 hingewiesen bzw. Bezug genommen.

Fig. 8 zeigt ein mögliches Ausführungsbeispiel der oberen Gleitlagerhalbschale 8 und der unteren Gleitlagerhalbschale 9 in einer perspektivischen Ansicht. Wie aus Fig. 8 ersichtlich, kann vorgesehen sein, dass sich der Strömungskanal 15 von der unteren Gleitlagerhalbschale 9 bis in die obere Gleitlagerhalbschale 8 hinein erstreckt. In der oberen Gleitlagerhalbschale 8 kann dann ein Keilspalt 16 vorgesehen sein, welcher zum Aufbringen des hydrodynamischen Effektes dient. In einer alternativen, nicht dargestellten Ausführungsvariante kann natürlich auch vorgesehen sein, dass sich der Strömungskanal 15 nicht bis in die obere Gleitlagerhalbschale 8 erstreckt, sondern dass der Keilspalt 16 bereits in der unteren Gleitlagerhalbschale 9 ausgebildet ist. Da das Schienenfahrzeug 1 vorzugsweise zur Bewegung in beide Fahrtrichtungen vorgesehen ist, sind die beiden Gleitlagerhalbschalen 8, 9 vorzugsweise symmetrisch bezüglich einer vertikalen Mittelebene ausgebildet.

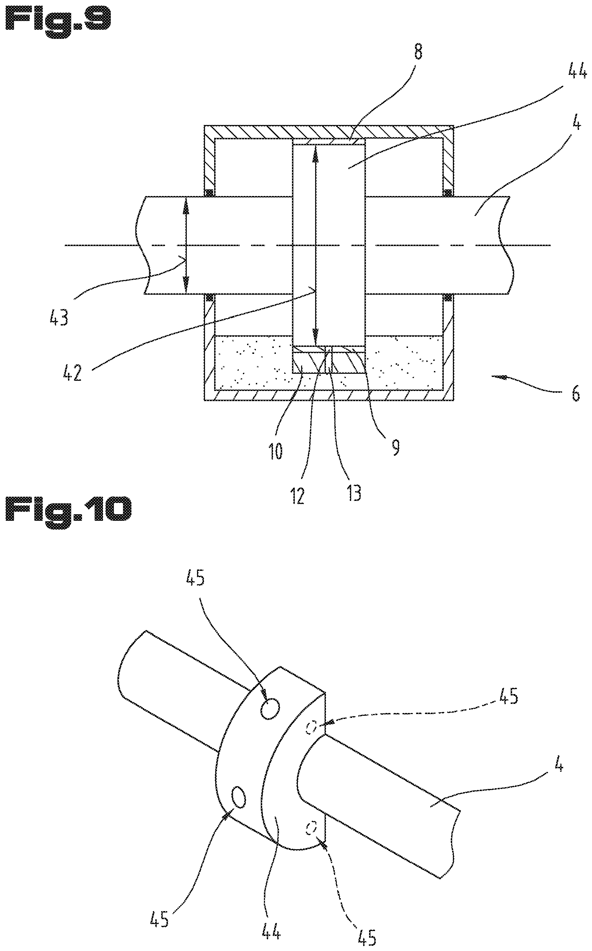

In der Fig. 9 ist eine weitere und gegebenenfalls für sich eigenständige Ausführungsform der Radsatzlagervorrichtung 6 gezeigt, wobei wiederum für gleiche Teile gleiche Bezugszeichen bzw. Bauteilbezeichnungen wie in den vorangegangenen Figuren 1 bis 8 verwendet werden. Um unnötige Wiederholungen zu vermeiden, wird auf die detaillierte Beschreibung in den vorangegangenen Figuren 1 bis 8 hingewiesen bzw. Bezug genommen.

Fig. 9 zeigt ein weiteres Ausführungsbeispiel der Radsatzlagervorrichtung 6. Wie aus Fig. 9 ersichtlich, kann vorgesehen sein, dass der Durchmesser 42 im Bereich der Gleitlagerhalbschalen 8, 9 größer ist als der Durchmesser 43 der restlichen Radsatzwelle 4. Dieser Bereich mit einem größeren Durchmesser 42 kann auch als Lagerbereich 44 bezeichnet werden.

Wie aus Fig. 9 ersichtlich, kann der Lagerbereich 44 beispielsweise bei einer geschmiedeten Radsatzwelle 4 einstückig mit dem Rest der Radsatzwelle 4 ausgebildet sein.

In Fig. 10 ist ein weiteres Ausführungsbeispiel einer Radsatzwelle 4 dargestellt. Wie aus Fig. 10 ersichtlich, kann vorgesehen sein, dass der Lagerbereich 44 in Form eines Aufsatzes ausgebildet ist. Wie aus Fig. 10 weiters ersichtlich, kann vorgesehen sein, dass der Aufsatz beispielsweise zwei Halbschalen umfasst, welche mittels Befestigungsmittel 45 zusammengehalten werden. Die Befestigungsmittel 45 können beispielsweise in Form von Schrauben ausgebildet sein, welche in umfänglich angeordneten Bohrungen aufgenommen sind.

Derartige Bohrungen können beispielsweise abgedeckt werden, sodass die hydrodynamischen Gleiteigenschaften nicht beeinträchtigt werden. Alternativ dazu ist es wie strichliert dargestellt auch denkbar, dass die Befestigungsmittel 45 nicht radial sondern teilweise axial in den Lagerbereich 44 eingebracht werden, sodass die Mantelfläche des Lagerbereiches 44 nicht beeinträchtigt wird. Natürlich können auch sämtliche andere Verbindungsmethoden zum Aufbringen eines Aufsatzes im Lagerbereich 44 ausgebildet sein. Von Vorteil bei Verwendung eines Aufsatzes ist, dass bei diesem ein zur Radsatzwelle 4 unterschiedlicher Werkstoff verwendet werden kann, welcher beispielsweise verbesserte Gleiteigenschaften aufweist.

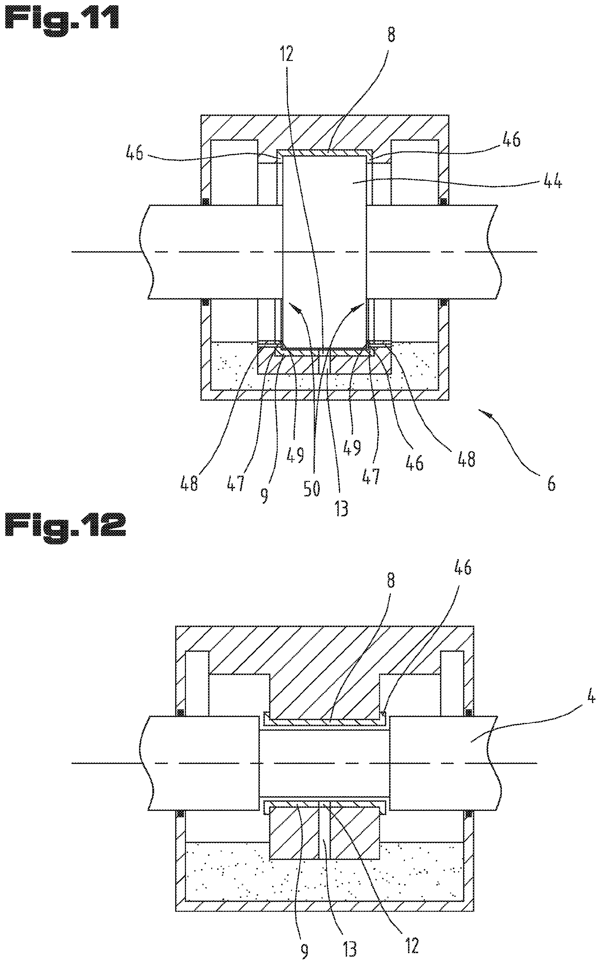

In der Fig. 11 ist eine weitere und gegebenenfalls für sich eigenständige Ausführungsform der Radsatzlagervorrichtung 6 gezeigt, wobei wiederum für gleiche Teile gleiche Bezugszeichen bzw. Bauteilbezeichnungen wie in den vorangegangenen Figuren 1 bis 10 verwendet werden. Um unnötige Wiederholungen zu vermeiden, wird auf die detaillierte Beschreibung in den vorangegangenen Figuren 1 bis 10 hingewiesen bzw. Bezug genommen.

Wie aus Fig. 11 ersichtlich, kann vorgesehen sein, dass die obere Gleitlagerhalbschale 8 und/oder die untere Gleitlagerhalbschale 9 einen Bund 46 aufweist, welcher zum Anschlag für einen abgesetzten Lagerbereich 44 dient. Der Bund 46 kann zur Aufnahme von axialen Lagerkräften dienen. Wie aus Fig. 11 ersichtlich, kann vorgesehen sein, dass analog zur hydrodynamischen Ausführung des radialen Gleitlagers auch das axiale Gleitlager, insbesondere der Bund 46, weitere Ölzufuhrbohrungen 47 in der unteren Gleitlagerhalbschale 9 bzw. damit korrespondierende weitere Ölzufuhrbohrungen 48 im Lagerdeckel 10 aufweist. Diese weiteren Zufuhrbohrungen 47, 48 können beidseitig des Lagerbereiches 44 sich in axialer Richtung erstreckend im Lagerdeckel 10 bzw. in der unteren Gleitlagerhalbschale 9 angeordnet sein.

Außerdem kann ein weiterer Strömungskanal 49 vorgesehen sein, welcher einen weiteren Keilspalt 50 aufweist und zur hydrodynamischen Axiallagerung dient.

Die Axiallagerung kann sowohl in der oberen Gleitlagerhalbschale als auch in der unteren Gleitlagerhalbschale 9 realisiert sein. In einem weiteren, nicht dargestellten Ausführungsbeispiel ist es jedoch auch denkbar, dass die Axiallagerung nur in der oberen Gleitlagerhalbschale 8 oder nur in der unteren Gleitlagerhalbschale 9 realisiert ist.

In einem weiteren, nicht dargestellten Ausführungsbeispiel ist es auch denkbar, dass die Axiallagerung nicht in einer Bundlagerung realisiert ist, sondern dass die Axiallagerung durch eigenständige Axiallager gebildet ist, wobei die Axiallagerung ebenfalls in Form eines hydrodynamischen Lagers ausgebildet ist.

In der Fig. 12 ist eine weitere und gegebenenfalls für sich eigenständige Ausführungsform der Radsatzlagervorrichtung 6 gezeigt, wobei wiederum für gleiche Teile gleiche Bezugszeichen bzw. Bauteilbezeichnungen wie in den vorangegangenen Figuren 1 bis 11 verwendet werden. Um unnötige Wiederholungen zu vermeiden, wird auf die detaillierte Beschreibung in den vorangegangenen Figuren 1 bis 11 hingewiesen bzw. Bezug genommen.

Wie aus Fig. 12 ersichtlich, kann auch vorgesehen sein, dass in der Radsatzwelle 4 eine Ausnehmung bzw. ein Einstich ausgebildet ist, in welchem die Gleitlagerhalbschalen 8, 9 aufgenommen sind. Der Bund 46 kann mit der Ausnehmung zusammenwirken.

In Fig. 13 ist ein Ausführungsbeispiel der Radsatzlagervorrichtung 6 in einer perspektivischen Ansicht dargestellt. Anhand der Fig. 13 wird im Folgenden der Verfahrensablauf zum Wechseln der oberen Gleitlagerhalbschale 8 erklärt. In einem ersten Verfahrensschritt werden die Befestigungsmittel 22 des Gehäusedeckel 21 gelöst, sodass der Gehäusedeckel 21 abgenommen werden kann. Hierbei ist es denkbar, dass der Gehäusedeckel 21 mitsamt dem darin befindlichen Schmieröl 18 abgenommen wird. Alternativ dazu ist es auch denkbar, dass das Schmieröl 18 vorab abgelassen wird, was beispielsweise mittels einer schematisch dargestellten Ölablassschraube 51 realisiert werden kann.

In einem weiteren Verfahrensschritt werden die Befestigungsmittel 11 des Lagerdeckels 10 gelöst, sodass dieser abgenommen werden kann. Die untere Gleitlagerhalbschale 9 ist im Lagerdeckel 10 aufgenommen und kann gemeinsam mit dem Lagerdeckel 10 entfernt werden.

In einem weiteren Verfahrensschritt kann das Fahrgestell 2 des Schienenfahrzeuges 1 relativ zum Radsatz 3 angehoben werden, sodass die obere Gleitlagerhalbschale 8 nicht mehr geklemmt wird. Bei einer ersten Ausführungsvariante wird hierbei das Fahrgestell 2 nur so weit angehoben, dass zwischen der Wellenaufnahme 7 und der oberen Gleitlagerhalbschale 8 ein geringer Spalt entsteht. Anschließend kann die obere Gleitlagerhalbschale 8 durch eine Drehbewegung aus der Wellenaufnahme 7 herausgedreht werden. Im unteren Bereich angekommen, kann die obere Gleitlagerhalbschale 8 radial von der Radsatzwelle 4 entfernt werden.

Alternativ dazu kann das Fahrgestell so weit angehoben werden, dass ein großer Abstand zwischen der Wellenaufnahme 7 und der Radsatzwelle 4 ausgebildet wird und die obere Gleitlagerhalbschale 8 einfach aus der Wellenaufnahme 7 entnommen werden kann.

Anschließend wird eine neue obere Gleitlagerhalbschale 8 eingesetzt und die Radsatzlagervorrichtung 6 in umgekehrter Reihenfolge wieder zusammengebaut. Da die untere Gleitlagerhalbschale 9 im Normalfall nicht belastet wird, braucht diese zumeist auch nicht ausgetauscht zu werden.

In einem weiteren Ausführungsbeispiel ist es auch denkbar, dass die untere Gleitlagerhalbschale 9 nicht als eigenständiger Bauteil ausgebildet ist, sondern dass die untere Gleitlagerhalbschale 9 als integraler Bauteil des Lagerdeckels 10 ausgebildet ist und somit der Strömungskanal 15 direkt im Lagerdeckel 10 ausgebildet ist.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Schienenfahrzeug | 30 | Wellendichtung |
| 2 | Fahrgestell | 31 | Wulst |
| 3 | Radsatz | 32 | Ausnehmung |
| 4 | Radsatzwelle | 33 | Ölablaufbohrung |
| 5 | Rad | 34 | Durchgangsbohrung |
| 6 | Radsatzlagervorrichtung | 35 | Filterelement |
| 7 | Wellenaufnahme | 36 | axiale Erstreckung Strömungska-nal |
| 8 | obere Gleitlagerhalbschale | | |
| 9 | untere Gleitlagerhalbschale | 37 | axiale Erstreckung Gleitlagerhalb-schale |
| 10 | Lagerdeckel | | |
| 11 | Befestigungsmittel Lagerdeckel | 38 | Kühlrippe |
| 12 | Ölzufuhrbohrung untere Gleitla-gerhalbschale | 39 | Sperrwand |
| | | 40 | Sperrluftkammer |
| 13 | Ölzufuhrbohrung Lagerdeckel | 41 | Druckluftzufuhr |
| 14 | radiale Innenseite | 42 | Durchmesser im Bereich der Gleit-lagerhalbschalen |
| 15 | Strömungskanal | | |
| 16 | Keilspalt | 43 | Durchmesser Radsatzwelle |
| 17 | Gehäuse | 44 | Lagerbereich |
| 18 | Schmieröl | 45 | Befestigungsmittel |
| 19 | oberer Teil Gehäuse | 46 | Bund |
| 20 | unterer Teil Gehäuse | 47 | weitere Ölzufuhrbohrung untere Gleitlagerhalbschale |
| 21 | Gehäusedeckel | | |
| 22 | Befestigungsmittel Gehäusedeckel | 48 | weitere Ölzufuhrbohrung Lagerde-ckel |
| 23 | Ölsumpf | | |
| 24 | Ölstand | 49 | weiterer Strömungskanal |
| 25 | Sensorik | 50 | weiterer Keilspalt |
| 26 | Ölzufuhrleitung | 51 | Ölablassschraube |
| 27 | Gleitoberfläche | | |
| 28 | poröse Struktur | | |
| 29 | Seitenwand Gehäuse | | |

## Patentansprüche

1. Schienenfahrzeug (1) umfassend:
ein Fahrgestell (2);
ein Radsatz (3) mit einer Radsatzwelle (4) und zwei Rädern (5);
zumindest zwei Radsatzlagervorrichtungen (6), welche am Fahrgestell (2) angeordnet sind oder im Fahrgestell (2) ausgebildet sind, wobei die Radsatzlagervorrichtungen (6) jeweils eine Wellenaufnahme (7) aufweisen, in welcher eine obere Gleitlagerhalbschale (8) ortsfest aufgenommen ist, wobei die Radsatzwelle (4) in der oberen Gleitlagerhalbschale (8) drehbar gelagert ist, und wobei die Radsatzlagervorrichtung (6) eine untere Gleitlagerhalbschale (9) umfasst, welche mit der oberen Gleitlagerhalbschale (8) zusammenwirkt,
wobei ein Gehäuse (17) ausgebildet ist, welches die Wellenaufnahme (7) umgibt, wobei im Gehäuse (17) ein Ölsumpf (23) ausgebildet ist, in welchem Schmieröl (18) zur Schmierung der Gleitlagerhalbschalen (8, 9), aufgenommen ist und wobei die Radsatzwelle (4) durch eine Seitenwand (29) des Gehäuses (17) nach außen geführt ist, wobei die untere Gleitlagerhalbschale (9) Ölzufuhrbohrungen (12) aufweist, welche die untere Gleitlagerhalbschale (9) radial durchdringen
**dadurch gekennzeichnet, dass**
die Gleitlagerhalbschalen (8, 9) als hydrodynamisches Gleitlager ausgebildet sind, wobei in der unteren Gleitlagerhalbschale (9) an der radialen Innenseite (14) ein Strömungskanal (15) ausgebildet ist, welcher in der unteren Gleitlagerhalbschale (9) oder in der oberen Gleitlagerhalbschale (8) in Form eines Keilspaltes (16) ausläuft, wobei der Strömungskanal (15) mit den Ölzufuhrbohrungen (12) der unteren Gleitlagerhalbschale (9) gekoppelt ist.

2. Schienenfahrzeug nach Anspruch 1, **dadurch gekennzeichnet, dass** die obere Gleitlagerhalbschale (8) zwischen der Wellenaufnahme (7) und der Radsatzwelle (4) angeordnet ist und die untere Gleitlagerhalbschale (9) mittels einem Lagerdeckel (10) in Position gehalten wird.

3. Schienenfahrzeug nach einem der vorhergehenden Ansprüche, **dadurch gekennzeichnet, dass** im Lagerdeckel (10) Ölzufuhrbohrungen (13) ausgebildet sind, welche mit den Ölzufuhrbohrungen (12) der unteren Gleitlagerhalbschale (9) deckungsgleich sind.

4. Schienenfahrzeug nach Anspruch 3, **dadurch gekennzeichnet, dass** der Ölstand (24) im Ölsumpf (23) so hoch gewählt ist, dass alle Eintrittsöffnungen der Ölzufuhrbohrungen (13) im Lagerdeckel (10) vollständig unterhalb des Niveau des Ölstandes (24) liegen und in den Ölsumpf (23) eintauchen.

5. Schienenfahrzeug nach einem der vorhergehenden Ansprüche, **dadurch gekennzeichnet, dass**, der Strömungskanal (15) eine axiale Erstreckung (36) zwischen 5% und 95%, insbesondere zwischen 10% und 80%, bevorzugt zwischen 30% und 70% der axialen Erstreckung (37) der unteren Gleitlagerhalbschale (9) aufweist.

6. Schienenfahrzeug nach einem der vorhergehenden Ansprüche, **dadurch gekennzeichnet, dass** die beiden Radsatzlagervorrichtungen (6) zwischen den beiden Rädern (5) des Radsatzes (3) angeordnet sind.

7. Schienenfahrzeug nach einem der vorhergehenden Ansprüche, **dadurch gekennzeichnet, dass** ein oberer Teil (19) des Gehäuses (17) mit der Wellenaufnahme (7) gekoppelt ist, oder einteilig mit der Wellenaufnahme (7) ausgebildet ist und ein unterer Teil (20) des Gehäuses (17) als Gehäusedeckel (21) ausgebildet ist, welcher mittels Befestigungsmittel (22) mit dem oberen Teil (19) des Gehäuses (17) gekoppelt ist.

8. Schienenfahrzeug nach einem der vorhergehenden Ansprüche, **dadurch gekennzeichnet, dass** das Fahrgestell (2) derart ausgebildet ist, dass die Außenseite des Gehäuses (17) während der Fahrt von der Zugluft umströmt wird.

9. Schienenfahrzeug nach einem der vorhergehenden Ansprüche, **dadurch gekennzeichnet, dass** an der Außenseite des Gehäuses (17), insbesondere an den Seitenwänden (29) Kühlrippen (38) angeordnet sind.

10. Schienenfahrzeug nach einem der vorhergehenden Ansprüche, **dadurch gekennzeichnet, dass** im Ölsumpf (23) eine poröse Struktur (28) angeordnet ist, die zur Beruhigung des Schmieröls (18) im Ölsumpf (23) dient.

11. Schienenfahrzeug nach einem der vorhergehenden Ansprüche, **dadurch gekennzeichnet, dass** in zumindest einer der Seitenwände (29) des Gehäuses (17) eine Wellendichtung (30) in Form eines Wellendichtringes angeordnet ist, welcher zur Abdichtung zwischen der Radsatzwelle (4) und dem Gehäuse (17) dient.

12. Schienenfahrzeug nach einem der Ansprüche 1 bis 10, **dadurch gekennzeichnet, dass** in zumindest einer der Seitenwände (29) des Gehäuses (17) eine Wellendichtung (30) in Form einer Labyrinthdichtung zwischen dem Gehäuse (17) und der Radsatzwelle (4) ausgebildet ist, welche zur Abdichtung der Radsatzwelle (4) dient.

13. Schienenfahrzeug nach Anspruch 12, **dadurch gekennzeichnet, dass** in den Seitenwänden (29) des Gehäuses (17) an der Unterseite der Labyrinthdichtung eine Ölablaufbohrung (33) angeordnet ist.

14. Schienenfahrzeug nach einem der vorhergehenden Ansprüche, **dadurch gekennzeichnet, dass** in Axialerstreckung der Radsatzwelle (4) außerhalb der Seitenwand (29) des Gehäuses (17) eine Sperrwand (39) angeordnet ist, wobei zwischen der Sperrwand (39) und der Seitenwand (29) des Gehäuses (17) eine Sperrluftkammer (40) ausgebildet ist.

15. Schienenfahrzeug nach einem der vorhergehenden Ansprüche, **dadurch gekennzeichnet, dass** an zumindest einer der Seitenwände (29) eine Durchgangsbohrung (34) ausgebildet ist, welche als Saugbohrung zum Aufbringen eines Unterdruckes im inneren des Gehäuses (17) dient.

16. Schienenfahrzeug nach Anspruch 15, **dadurch gekennzeichnet, dass** der Durchgangsbohrung (34) ein Filterelement (35) vorgeschalten ist.

17. Schienenfahrzeug nach einem der vorhergehenden Ansprüche, **dadurch gekennzeichnet, dass** der Durchmesser (42) der Radsatzwelle (4) im Bereich der Gleitlagerhalbschalen (8, 9) größer ist als der Durchmesser (43) der restlichen Länge der Radsatzwelle (4) oder dass im Bereich der Gleitlagerhalbschalen (8, 9) ein Aufsatzelement ausgebildet ist, welches an der Radsatzwelle (4) befestigt ist.

18. Schienenfahrzeug nach einem der vorhergehenden Ansprüche, **dadurch gekennzeichnet, dass** zumindest eine der beiden Gleitlagerhalbschalen (8, 9) einen Bund (46) zur axialen Kraftübertragung aufweist oder dass ein gesondertes Axiallager ausgebildet ist.

19. Schienenfahrzeug nach Anspruch 18, **dadurch gekennzeichnet, dass** die untere Gleitlagerhalbschale (9) weitere Ölzufuhrbohrungen (47) aufweist, welche die untere Gleitlagerhalbschale (9) im Bereich des Bundes (46) oder des Axiallagers axial durchdringen, wobei im Lagerdeckel (10) weitere Ölzufuhrbohrungen (48) ausgebildet sind, welche mit den weiteren Ölzufuhrbohrungen (47) der unteren Gleitlagerhalbschale deckungsgleich sind.

20. Schienenfahrzeug nach Anspruch 19, **dadurch gekennzeichnet, dass** in der unteren Gleitlagerhalbschale (9) an der Innenseite des Bundes (46) oder des Axiallagers ein weiterer Strömungskanal (49) ausgebildet ist, welcher in der unteren Gleitlagerhalbschale (9) oder in der oberen Gleitlagerhalbschale (8) in Form eines weiteren Keilspaltes (50) ausläuft, wobei der weitere Strömungskanal (49) mit den weiteren Ölzufuhrbohrungen (48) der unteren Gleitlagerhalbschale (9) gekoppelt ist.

## Claims

1. A rail vehicle (1) comprising:
a chassis (2);
a wheelset (3) having a wheelset shaft (4) and two wheels (5);
at least two wheelset bearing devices (6), which are arranged on the chassis (2) or formed in the chassis (2), wherein the wheelset bearing devices (6) each have a shaft receptacle (7), in which an upper sliding bearing half shell (8) is fixedly received,
wherein the wheelset shaft (4) is rotatably mounted in the upper sliding bearing half shell (8), and wherein the wheelset bearing device (6) comprises a lower sliding bearing half shell (9), which cooperates with the upper sliding bearing half shell (8),
wherein a housing (17) is formed, which surrounds the shaft receptacle (7), wherein an oil sump (23) is formed in the housing (17), in which oil sump (23) lubricating oil (18) for the lubrication of the sliding bearing half shells (8, 9) is received and wherein the wheelset shaft (4) is guided outwards through a side wall (29) of the housing (17),
wherein the lower sliding bearing half shell (9) has oil supply bores (12), which radially penetrate the lower sliding bearing half shell (9),
**characterized in that**
the sliding bearing half shells (8, 9) are configured as a hydrodynamic sliding bearing,
wherein a flow channel (15) is formed in the lower sliding bearing half shell (9) on the radial inner sides (14), which flow channel (15) tapers off in the shape of a wedge gap (16) in the lower sliding bearing half shell (9) or in the upper sliding bearing half shell (8), wherein the flow channel (15) is coupled with the oil supply bores (12) of the lower sliding bearing half shell (9).

2. The rail vehicle according to claim 1, **characterized in that** the upper sliding bearing half shell (8) is arranged between the shaft receptacle (7) and the wheelset shaft (4), and the lower sliding bearing half shell (9) is held in position by means of a bearing cap (10).

3. The rail vehicle according to one of the preceding claims, **characterized in that** oil supply bores (13) are formed in the bearing cap (10), which oil supply bores (13) are congruent with the oil supply bores (12) of the lower sliding bearing half shell (9).

4. The rail vehicle according to claim 3, **characterized in that** the oil level (24) in the oil sump (23) is selected at such a height that all inlet openings of the oil supply bores (13) in the bearing cap (10) are completely below the level of the oil level (24) and are immersed in the oil sump (23).

5. The rail vehicle according to one of the preceding claims, **characterized in that** the flow channel (15) has an axial extension (36) of between 5% and 95%, in particular between 10% and 80%, preferably between 30% and 70% of the axial extension (37) of the lower sliding bearing half shell (9).

6. The rail vehicle according to one of the preceding claims, **characterized in that** the two wheelset bearing devices (6) are arranged between the two wheels (5) of the wheelset (3).

7. The rail vehicle according to one of the preceding claims, **characterized in that** an upper part (19) of the housing (17) is coupled with the shaft receptacle (7) or is formed in one piece with the shaft receptacle (7), and a lower part (20) of the housing (17) is formed as a housing cap (21), which is coupled with the upper part (19) of the housing (17) by means of fastening means (22).

8. The rail vehicle according to one of the preceding claims, **characterized in that** the chassis (2) is formed such that while moving, air draft flows around the outer side of the housing (17).

9. The rail vehicle according to one of the preceding claims, **characterized in that** cooling fins (38) are arranged on the outer side of the housing (17), in particular on the side walls (29).

10. The rail vehicle according to one of the preceding claims, **characterized in that** a porous structure (28) is arranged in the oil sump (23), which serves to steady the lubricating oil (18) in the oil sump (23).

11. The rail vehicle according to one of the preceding claims, **characterized in that** in at least one of the side walls (29) of the housing (17), a shaft seal (30) in the form of a shaft sealing ring is arranged, which serves to provide a seal between the wheelset shaft (4) and the housing (17).

12. The rail vehicle according to one of claims 1 to 10, **characterized in that** in at least one of the side walls (29) of the housing (17), a shaft seal (30) in the form of a labyrinth seal is formed between the housing (17) and the wheelset shaft (4), which serves to seal the wheelset shaft (4).

13. The rail vehicle according to claim 12, **characterized in that** in the side walls (29) of the housing (17), on the bottom side of the labyrinth seal, an oil draining bore (33) is arranged.

14. The rail vehicle according to one of the preceding claims, **characterized in that** a sealing wall (39) is arranged in the axial extension of the wheelset shaft (4), outside of the side wall (29) of the housing (17), wherein a sealing air chamber (40) is formed between the sealing wall (39) and the side wall (29) of the housing (17).

15. The rail vehicle according to one of the preceding claims, **characterized in that** on at least one of the side walls (29), a through-bore (34) is formed, which serves as a suction bore for applying a vacuum inside the housing (17).

16. The rail vehicle according to claim 15, **characterized in that** a filter element (35) is slotted in ahead of the through-bore (34).

17. The rail vehicle according to one of the preceding claims, **characterized in that** the diameter (42) of the wheelset shaft (4) in the region of the sliding bearing half shells (8, 9) is larger than the diameter (43) of the remaining length of the wheelset shaft (4), or that an attachment element is formed in the region of the sliding bearing half shells (8, 9), which is fastened to the wheelset shaft (4).

18. The rail vehicle according to one of the preceding claims, **characterized in that** at least one of the two sliding bearing half shells (8, 9) has a collar (46) for the axial transmission of force, or that a separate axial bearing is formed.

19. The rail vehicle according to claim 18, **characterized in that** the lower sliding bearing half shell (9) has further oil supply bores (47), which axially penetrate the lower sliding bearing half shell (9) in the region of the collar (46) or of the axial bearing, wherein further oil supply bores (48) are formed in the bearing cap (10), which are congruent with the further oil supply bores (47) of the lower sliding bearing half shell.

20. The rail vehicle according to claim 19, **characterized in that** in the lower sliding bearing half shell (9), on the inner side of the collar (46) or of the axial bearing, a further flow channel (49) is formed, which tapers off in the shape of a further wedge gap (50) in the lower sliding bearing half shell (9) or in the upper sliding bearing half shell (8), wherein the further flow channel (49) is coupled with the further oil supply bores (48) of the lower sliding bearing half shell (9).

## Revendications

1. Véhicule ferroviaire (1) comprenant :
un châssis (2) ;
un essieu (3) avec un arbre d'essieu (4) et deux roues (5) ;
au moins deux dispositifs de paliers d'essieux (6), qui sont disposés sur le châssis (2) ou sont réalisés dans le châssis (2), dans lequel les dispositifs de paliers d'essieux (6) comprennent respectivement un logement d'arbre (7) dans lequel est logée, de manière fixe, une demi-coque de palier lisse supérieure (8), dans lequel l'arbre d'essieu (4) est logé de manière rotative dans la demi-coque de palier lisse supérieure (8) et dans lequel le dispositif de palier d'essieu (6) comprend une demi-coque de palier lisse inférieure (9) qui interagit avec la demi-coque de palier lisse supérieure (8),
dans lequel un boîtier (17) est réalisé, qui entoure le logement d'arbre (7), dans lequel,
dans le boîtier (17), est réalisé un carter d'huile (23) dans lequel est logée de l'huile de lubrification (18) pour la lubrification des demi-coques de palier lisse (8, 9) et dans lequel l'arbre d'essieu (4) est guidé vers l'extérieur par une paroi latérale (29) du boîtier (17), dans lequel la demi-coque de palier lisse inférieure (9) comprend des perçages d'alimentation en huile (12) qui traversent la demi-coque de palier lisse inférieure (9) de manière radiale,
**caractérisé en ce que**
les demi-coques de paliers lisses (8, 9) sont conçues comme un palier lisse hydrodynamique dans lequel, dans la demi-coque de palier lisse inférieure (9), sur le côté interne radial (14), est réalisé un canal d'écoulement (15), qui sort, dans la demi-coque de palier lisse inférieure (9) ou dans la demi-coque de palier lisse supérieure (8), sous la forme d'un interstice conique (16), dans lequel le canal d'écoulement (15) est couplé avec les perçages d'alimentation en huile (12) de la demi-coque de palier lisse inférieure (9).

2. Véhicule ferroviaire selon la revendication 1, **caractérisé en ce que** la demi-coque de palier lisse supérieure (8) est disposée entre le logement d'arbre (7) et l'arbre d'essieu (4) et la demi-coque de palier lisse inférieure (9) est maintenue en position au moyen d'un couvercle de palier (10).

3. Véhicule ferroviaire selon l'une des revendications précédentes, **caractérisé en ce que**, dans le couvercle de palier (10), sont réalisés des perçages d'alimentation en huile (13), qui sont coextensifs avec les perçages d'alimentation en huile (12) de la demi-coque de palier lisse inférieure (9).

4. Véhicule ferroviaire selon la revendication 3, **caractérisé en ce que** le niveau d'huile (24) dans le carter d'huile (23) est choisi de façon à ce que toutes les ouvertures d'entrée des perçages d'alimentation en huile (13) dans le couvercle de palier (10) se trouvent entièrement en dessous du niveau d'huile (24) et soient immergés dans le carter d'huile (23).

5. Véhicule ferroviaire selon l'une des revendications précédentes, **caractérisé en ce que** le canal d'écoulement (15) présente une extension axiale (36) entre 5 % et 95 %, plus particulièrement entre 10 % et 80 %, de préférence entre 30 % et 70 % de l'extension axiale (37) de la demi-coque de palier lisse inférieure (9).

6. Véhicule ferroviaire selon l'une des revendications précédentes, **caractérisé en ce que** les deux dispositifs de paliers d'essieu (6) sont disposés entre les deux roues (5) de l'essieu (3).

7. Véhicule ferroviaire selon l'une des revendications précédentes, **caractérisé en ce qu'**une partie supérieure (19) du boîtier (17) est couplée avec le logement d'arbre (7) ou est constituée d'une seule pièce avec le logement d'arbre (7) et une partie inférieure (20) du boîtier (17) est conçue comme un couvercle de boîtier (21), qui est couplé, à l'aide de moyens de fixation (22), avec la partie supérieure (19) du boîtier (17).

8. Véhicule ferroviaire selon l'une des revendications précédentes, **caractérisé en ce que** le châssis (2) est conçu de façon à ce que le côté externe du boîtier (17) soit enveloppé par le courant d'air pendant la marche.

9. Véhicule ferroviaire selon l'une des revendications précédentes, **caractérisé en ce que**, sur le côté externe du boîtier (17), plus particulièrement sur les parois latérales (29), sont disposées des nervures de refroidissement (38).

10. Véhicule ferroviaire selon l'une des revendications précédentes, **caractérisé en ce que**, dans le carter d'huile (23), est disposée une structure poreuse (28) qui permet de stabiliser l'huile de lubrification (18) dans le carter d'huile (23).

11. Véhicule ferroviaire selon l'une des revendications précédentes, **caractérisé en ce que**, dans au moins une des parois latérales (29) du boîtier (17), est disposé un joint d'étanchéité d'arbre (30) sous la forme d'une bague d'étanchéité d'arbre, qui permet de réaliser une étanchéité entre l'arbre d'essieu (4) et le boîtier (17).

12. Véhicule ferroviaire selon l'une des revendications 1 à 10, **caractérisé en ce que**, dans au moins une des parois latérales (29) du boîtier (17), est disposé un joint d'étanchéité d'arbre (30) sous la forme d'un joint d'étanchéité labyrinthique entre le boîtier (17) et l'arbre d'essieu (4), qui permet de réaliser l'étanchéité de l'arbre d'essieu (4).

13. Véhicule ferroviaire selon la revendication 12, **caractérisé en ce que**, dans les parois latérales (29) du boîtier (17), sur le côté inférieur du joint d'étanchéité labyrinthique, est disposé un perçage d'évacuation d'huile (33).

14. Véhicule ferroviaire selon l'une des revendications précédentes, **caractérisé en ce que**, dans l'extension axiale de l'arbre d'essieu (4), à l'extérieur de la paroi latérale (29) du boîtier (17), est disposée une paroi de blocage (39), dans lequel, entre la paroi de blocage (39) et la paroi latérale (29) du boîtier (17), est réalisée une chambre d'air de blocage (40).

15. Véhicule ferroviaire selon l'une des revendications précédentes, **caractérisé en ce que**, sur au moins une des parois latérales (29), est réalisé un perçage traversant (34) qui sert de perçage d'aspiration pour l'application d'une dépression à l'intérieur du boîtier (17).

16. Véhicule ferroviaire selon la revendication 15, **caractérisé en ce que**, en amont du perçage traversant (34), est disposé un élément filtrant (35).

17. Véhicule ferroviaire selon l'une des revendications précédentes, **caractérisé en ce que** le diamètre (42) de l'arbre d'essieu (4) au niveau des demi-coques de palier lisse (8, 9) est supérieur au diamètre (43) du reste de la longueur de l'arbre d'essieu (4) ou **en ce que**, au niveau des demi-coques de palier lisse (8, 9), est réalisé un élément de support qui est fixé à l'arbre d'essieu (4).

18. Véhicule ferroviaire selon l'une des revendications précédentes, **caractérisé en ce qu'**au moins une des deux demi-coques de palier lisse (8, 9) comprend un collet (46) pour la transmission des forces axiales et en qu'un palier axial séparé est réalisé.

19. Véhicule ferroviaire selon la revendication 18, **caractérisé en ce que** la demi-coque de palier lisse inférieure (9) comprend des perçages d'alimentation en huile supplémentaires (47) qui traversent axialement la demi-coque de palier lisse inférieure (9) au niveau du collet (46) ou du palier axial, dans lequel, dans le couvercle de palier (10), sont réalisés des perçages d'alimentation en huile supplémentaires (48), qui sont coextensifs avec les perçages d'alimentation en huile supplémentaires (47) de la demi-coque de palier lisse inférieure.

20. Véhicule ferroviaire selon la revendication 19, **caractérisé en ce que**, dans la demi-coque de palier lisse inférieure (9), sur le côté interne du collet (46) ou du palier axial, est réalisé un canal d'écoulement supplémentaire (49), qui sort, dans la demi-coque de palier lisse inférieure (9) ou dans la demi-coque de palier lisse supérieure (8), sous la forme d'un interstice conique supplémentaire (50), dans lequel le canal d'écoulement supplémentaire (49) est couplé avec les perçages d'alimentation en huile supplémentaires (48) de la demi-coque de palier lisse inférieure (9).
